# EUROPÄISCHE PATENTSCHRIFT

(11) **EP 2 314 437 B1**
(45) Veröffentlichungstag und Bekanntmachung des Hinweises auf die Patenterteilung: **07.12.2016**
(21) Anmeldenummer: 10163121.6
(22) Anmeldetag: 18.05.2010
(51) Int. Cl.: B29C 43/02, B29C 43/20, B29K 105/04, B60R 13/08, B29C 43/36, E04B 1/84, E04B 1/90

(54) **Verfahren zur Herstellung von Hohlkörpern aus Kunststoff, Kunststoffhohlkörper mit neuartigen Eigenschaften**
Method for manufacturing hollow bodies from plastic, plastic bodies with new properties
Procédé de fabrication de corps creux en matière synthétique, corps creux en matière synthétique doté de nouvelles propriétés

(30) Priorität: 16.10.2009 DE 102009045769
(43) Veröffentlichungstag der Anmeldung: 27.04.2011
(73) Patentinhaber: Carcoustics TechConsult GmbH, 51381 Leverkusen (DE)
(72) Erfinder: Luger, Markus, 6845 Hohenems (AT); Geissler, Richard, 6912 Hoerbranz (AT)
(74) Vertreter: Patentanwälte Bauer Vorberg Kayser

(56) Entgegenhaltungen:
- EP-A2- 0 185 839
- DE-A1- 4 029 685
- DE-A1- 10 311 421
- DE-A1-102005 029 729
- DE-A1-102005 045 794
- FR-A1- 2 852 551
- US-A1- 2002 170 657
- US-A1- 2004 129 379
- US-A1- 2005 175 794
- US-B1- 6 852 268

## Beschreibung

Die vorliegende Erfindung betrifft das Gebiet der Herstellung von Hohlkörpern aus Kunststoffen, insbesondere ein Verfahren zur Herstellung von Kunststoffhohlkörpern mittels eines beheizten Formwerkzeugs. Weiterhin betrifft sie Kunststoffhohlkörper mit neuartigen Eigenschaften.

Zur Herstellung von Kunststoffhohlkörpern ist aus dem Stand der Technik eine Mehrzahl von Herstellungsverfahren bekannt. Im einfachsten Fall werden z.B. mittels Formpressen zwei separate Hälften eines Kunststoffihohlkörpers wie z.B. eines Kraftstofftanks für ein Kraftfahrzeug aus einem thermoplastischen Kunststoff ausgebildet, die dann in einem nachfolgenden Verfahrensschritt z.B. thermisch verschweißt werden. Dieses Herstellungsverfahren ist verhältnismäßig aufwendig, da die einzelnen Verfahrensschritte nicht in einer Maschine durchgeführt werden können. Auch ist die Belastbarkeit der entstehenden Schweißnaht recht gering.

Höherwertige Kunststoffhohlkörper, welche eine hohe mechanische Belastbarkeit z.B. in Bezug auf einen überatmosphärischen Innendruck aufweisen, lassen sich mittels der so genannten Extrusions-Blasformtechnik herstellen. Hierzu wird aus einem thermoplastischen Kunststoff ein Schlauch extrudiert, der mittels eingeblasener Luft expandiert und der Kavität eines beheizten Formwerkzeugs zugeführt wird. In der Kavität können dann auch aufwendiger geformte, nahtlose Hohlkörper geformt werden. Die Struktur schwächende Nähte können auf diese Weise minimiert werden. Moderne Blasformverfahren erlauben sogar variierende Wandstärken im hergestellten Hohlköper. Blasformverfahren können z.B. zur Herstellung von Flaschen, Kanistern, Fässern, Tanks, Rohren und Schläuchen verwendet werden. Aber auch aufwendiger geformte Hohlkörper wie hochdichte Kraftstofftanks, Strukturteile oder Motorraumkapseln für Kraftfahrzeuge, und selbst Transportpaletten können mittels der Blasformtechnik hergestellt werden. Nachteilig an der Blasformtechnik ist der verhältnismäßig hohe maschinelle Aufwand, welcher die Verwendung dieser Technik für Kleinserien verbietet. Darüber hinaus sind Kombinationen verschiedener Materialien z.B. mit verschiedenen chemischen oder physikalischen Eigenschaften nicht möglich.

Die DE 103 11 421 A1 beschreibt ein wärme- und schallisolierendes Blasformteil mit mindestens zwei Lagen, die einen Hohlraum definieren. Mindestens eine der beiden Lagen ist perforiert und wird durch eine Aluminiumfolie gebildet. In dem Hohlraum ist ein Körper aus schallabsorbierendem Material angeordnet.

Die US 2002/0170657 A1 beschreibt druckgeformte Laminate, die eine erste Schicht und eine zweite Schicht aufweisen, wobei mindestens eine Schicht aus Stoff gebildet ist. Zwischen der ersten und der zweiten Schicht ist eine Schaumschicht angeordnet.

Aufgabe der vorliegenden Erfindung ist es daher, ein Verfahren zur Herstellung von Kunststoffihohlkörpern anzugeben, welches rationell auch bei Kleinserien anzuwenden ist. Weiterhin ist Aufgabe der Erfindung, einen Kunststoffhohlkörper mit verbesserten Eigenschaften sowie ein Verfahren zu dessen Herstellung bereitzustellen.

Gelöst wird diese Aufgabe mittels des Verfahrens gemäß Anspruch 1 und durch einen Kunststoffhohlkörper gemäß Anspruch 10.

Die Unteransprüche betreffen verschiedene vorteilhafte Weiterbildungen des erfindungsgemäßen Verfahrens sowie des erfindungsgemäßen Kunststoffhohlkörpers, die - soweit technisch sinnvoll - beliebig miteinander kombiniert werden können.

Das erfindungsgemäße Verfahren ist zur Herstellung von Kunststoffhohlkörpern vorgesehen, und weist folgende Verfahrensschritte auf:
- Bereitstellen eines Materialverbunds bestehend aus
   o einer platten- oder folienförmigen ersten Lage aus einem thermoplastischen ersten Kunststoff,
   o einer platten- oder folienförmigen zweiten Lage aus einem zweiten Kunststoff,
   o einer zwischen der ersten und der zweiten Lage angeordneten plattenförmigen, offenzelligen oder gemischtzelligen Schaumlage aus einem dritten Kunststoff,
   • Zuführen des Materialverbunds zu der geöffneten Kavität eines beheizten Formwerkzeugs, und
   • Schließen des Formwerkzeugs, wobei
      o zumindest abschnittsweise Druck auf den Materialverbund ausgeübt wird, dergestalt, dass in den druckbeaufschlagten Abschnitten die erste und/oder zweite Lage thermogeformt sowie die Schaumlage komprimiert wird, woraus eine dauerhafte Verformung zumindest der ersten Lage und/oder der zweiten Lage aus ihrer bevorzugt ebenen Ausgangskonfiguration und der Schaumlage resultiert,
      o sich im Formwerkzeug die erste und/oder zweite Lage partiell von der Schaumlage dergestalt löst, dass die Schaumlage im Wesentlichen nur in den komprimierten Abschnitten in mechanischem Kontakt mit der ersten und/oder zweiten Lage steht,
      o sich in den Bereichen ohne mechanischen Kontakt ein luft-/gasgefüllter Hohlraum, der allseitig abgeschlossen ist bildet, wobei die Luft bzw. das Gas, welches neben der verbleibenden Schaumlage die entstehenden Hohlräume ausfüllt, zu wesentlichen Teilen aus den Poren in den komprimierten Bereichen der offen- oder gemischtzelligen Schaumlage stammt.

Die erfindungsgemäße Verfahrensweise erlaubt die Herstellung von Kunststoffhohlkörpern, deren Innenraum ganz oder teilweise mit einem Schaumstoff ausgefüllt ist. Dabei kann die Verfahrensführung so gewählt werden, dass sich im Formwerkzeug die erste oder/und zweite Lage von der Schaumlage löst, dergestalt, dass die Schaumlage im Wesentlichen nur in den komprimierten Abschnitten in mechanischem Kontakt mit der ersten oder / und der zweiten Lage steht. In den Bereichen ohne mechanischen Kontakt bildet sich ein luft-/gasgefüllter Hohlraum, der allseitig abgeschlossen sein kann. Die Luft bzw. das Gas, welches neben der verbleibenden Schaumlage die entstehenden Hohlräume ausfüllt, stammt dabei zu wesentlichen Teilen aus den Zellen in den komprimierten Bereichen der vormals offen- oder gemischtzelligen Schaumlage. Es ist aber auch möglich, dass die Schaumlage die entstehenden Hohlräume im Wesentlichen vollständig ausfüllt.

Die Ausbildung von luft- bzw. gasgefüllten Hohlräumen kann unterstützt werden, indem beim Schließen des Formwerkzeugs Luft aus der Kavität abgesaugt wird.

Insbesondere kann beim Absaugen der Luft ein Unterdruck in der Kavität erzeugt werden. Alternativ oder unterstützend kann Luft oder ein inertes Füllgas zwischen die erste Lage und die Schaumlage oder / und die zweite Lage und die Schaumlage eingeblasen werden, was die Ausbildung von luft- oder gasgefüllten Strukturen zusätzlich befördert.

In einer bevorzugten Ausgestaltung des Verfahrens wird die erste Lage in den druckbeaufschlagten Abschnitten mit der zweiten Lage und / oder mit der Schaumlage bevorzugt thermisch verschweißt. Die Verschweißung kann ggf. aber auch mittels anderer Schweißtechniken ausgeführt werden. Insbesondere kann die Verschweißung so ausgeführt werden, dass sie den Materialverbund zumindest bereichsweise randseitig mechanisch verbindet, bevorzugt aber vollständig umlaufend, so dass ein gegen die Umgebung vollständig abgeschlossener Innenraum entsteht. Die Verschweißung der ersten Kunststofflage mit der Schaumlage und/oder der zweiten Kunststofflage wird also bevorzugt so ausgeführt, dass der entstehende Kunststoffhohlkörper einen im Wesentlichen vollständig abgeschlossenen Luft- / Gasraum einschließt.

Für eine effektive Verfahrensführung ist es von wesentlicher Bedeutung, dass der erste und der zweite Kunststoff miteinander verschweißbar sind, insbesondere mittels thermischer Verschweißung. Weiterhin hat es sich als vorteilhaft herausgestellt, wenn auch der dritte Kunststoff bevorzugt thermisch mit dem ersten und/oder dem zweiten Kunststoff verschweißbar ist.

Vorstehend wurde bereits erwähnt, dass es sich bei dem ersten Kunststoff um ein Thermoplast handelt. Bevorzugt handelt es sich auch bei dem zweiten und bei dem dritten Kunststoff um ein Thermoplast handeln. Dabei können sowohl der erste als auch der zweite Kunststoff vorteilhaft aus der Gruppe bestehend aus den Werkstoffen ABS, GMT, LWRT, PMMA, PVC, PE, PET, PS, PP, PSEVOHPE, PPEVOHPE, PEEK ausgewählt werden. Der zweite und/oder insbesondere der dritte Kunststoff können aber auch ein Duroplast oder ein Elastomer sein. Besonders bevorzugt handelt es sich bei dem dritten Kunststoff aber um einen geschäumten Kunststoff, der aus der Gruppe bestehend aus den Werkstoffen PUR, PPE, PSE, PVCE, NBR, PF ausgewählt ist. Der Schaumstoff sollte offenzellig oder gemischtzellig sein. Wird ein thermoplastischer Schaumstoff ausgewählt so kann unter Umständen auch die Verwendung eines geschlossenzelligen Schaumstoffs möglich und vorteilhaft sein.

Es stellt einen besonderen Vorteil des erfindungsgemäßen Verfahrens dar, dass der erste und der zweite Kunststoff chemisch oder / und physikalisch voneinander verschieden sein können, aber nicht müssen. So können der erste und der zweite Kunststoff voneinander verschiedene Farben aufweisen, wodurch sich gestalterische Vorteile ergeben, die z.B. bei der Herstellung von Schallschutzelementen mit einer Sichtseite und einer Funktionsseite relevant werden können. Auch kann der platten- oder folienförmige, erste Kunststoff andere mechanische Eigenschaften aufweisen als der platten- oder folienförmige, zweite Kunststoff, z.B. indem verschiedene Materialstärken ein und desselben Kunststoffmaterials oder verschiedener Materialien verwendet werden. Alternativ kann es sich entweder bei dem ersten oder bei dem zweiten Kunststoff oder bei beiden Kunststoffen auch um einen faserverstärkten Kunststoff (GMT, LWRT) handeln, der eine hohe Schlagzähigkeit aufweist.
Als besonders vorteilhaft hat sich eine Kombination erwiesen aus einer zweiten Lage aus einem faserverstärkten Kunststoff und einer ersten Lage aus einem ungefüllten/nicht verstärkten Thermoplast wie PP, welches sich hervorragend thermoformen lässt. Eine solche Materialkombination lässt sich z.B. vorteilhaft zur Herstellung von akustisch wirksamen Motorraumkapseln verwenden, wobei die faserverstärkte Seite zum Fahrzeug-Unterboden und die PP-Seite zum Motorraum weist. Die PP-Seite bildet dann die akustisch wirksamen Strukturen aus.

Ein erfindungsgemäßer Kunststoffhohlkörper umfasst einen Materialverbund, der zumindest die folgenden Bestandteile aufweist:
- eine formgeprägte, platten- oder folienförmige erste Lage aus einem thermoplastischen ersten Kunststoff,
- eine ggf. formgeprägte, platten- oder folienförmige zweite Lage aus einem zweiten Kunststoff,
- eine zwischen der ersten und der zweiten Lage angeordnete, offenzellige oder gemischtzellig Schaumlage aus einem dritten Kunststoff,
   wobei
- die Schaumlage zumindest abschnittsweise entsprechend der Formprägung der ersten Lage und/oder der zweiten Lage komprimiert ist,
- die Schaumlage im Wesentlichen nur in den komprimierten Abschnitten in mechanischem Kontakt mit der ersten oder / und der zweiten Lage steht und
- sich in den Bereichen ohne mechanischen Kontakt ein luft-/gasgefüllter Hohlraum, der allseitig abgeschlossen ist bildet, wobei die Luft bzw. das Gas, welches neben der verbleibenden Schaumlage die entstehenden Hohlräume ausfüllt, zu wesentlichen Teilen aus den Poren in den komprimierten Bereichen der offen- oder gemischtzelligen Schaumlage stammt.

Es ist aber auch möglich, dass die Schaumlage die entstehenden Hohlräume bzw. Kammern im Wesentlichen vollständig ausfüllt.

Bevorzugt ist in dem erfindungsgemäßen Kunststoffhohlkörper die erste Lage in den komprimierten Abschnitten mit der zweiten Lage und / oder mit der Schaumlage bevorzugt thermisch verschweißt, und zwar vorteilhaft dergestalt, dass die Verschweißung den Materialverbund zumindest bereichsweise randseitig verbindet. Besondere Vorteile ergeben sich, wenn der Kunststoffhohlkörper einen im Wesentlichen vollständig abgeschlossenen Luftraum einschließt, z.B. durch eine im Wesentlichen vollständig umlaufende thermische Verschweißung.

Für den Herstellungsprozess eines erfindungsgemäßen Kunststoffhohlkörpers hat es sich als besonders vorteilhaft erwiesen, wenn der erste und der zweite Kunststoff thermisch miteinander verschweißbar sind. In diesem Fall kann der Kunststoffhohlkörper besonders einfach und effizient mittels einer bevorzugten Ausgestaltung des erfindungsgemäßen Verfahrens hergestellt werden. Nochmals verbesserte Produkteigenschaften erhält man, wenn weiterhin auch der dritte Kunststoff thermisch mit dem ersten und/oder dem zweiten Kunststoff verschweißbar ist.

Bezüglich der Auswahl von erstem, zweitem und drittem Kunststoff wird auf die vorstehenden Ausführungen zu Werkstoffauswahl und chemischen bzw. physikalischen Eigenschaften im Rahmen des erfindungsgemäßen Verfahrens verwiesen, die unmittelbar auf den erfindungsgemäßen Hohlkörper übertragbar sind.

Weitere Vorteile und Merkmale des erfindungsgemäßen Verfahrens sowie des erfindungsgemäßen Hohlkörpers ergeben sich aus den Unteransprüchen sowie den nachfolgend diskutierten Ausführungsbeispielen. Diese sind exemplarisch und nicht einschränkend zu verstehen und werden anhand der Zeichnung näher erläutert. In dieser zeigen:
- Fig. 1 u. 2:: einen Materialverbund zur Durchführung des erfindungsgemäßen Verfahrens,
- Fig. 3 und 4:: den in die geöffnete Kavität eines Formwerkzeugs eingebrachten Materialverbund,
- Fig. 4:: das Formwerkzeug mit eingebrachtem Materialverbund während des Schließvorgangs,
- Fig. 5:: das weitgehend geschlossene Formwerkzeug mit eingebrachtem Materialverbund, in dem sich Hohlkörper auszubilden beginnen,
- Fig. 6:: das vollständig geschlossene Formwerkzeug mit eingebrachtem Materialverbund, in dem sich Hohlkörper ausgebildet haben,
- Fig. 7:: eine erste Variante eines erfindungsgemäßen Produkts hergestellt gemäß des erfindungsgemäßen Verfahrens,
- Fig. 8:: eine zweite Variante eines erfindungsgemäßen Produkts hergestellt gemäß des erfindungsgemäßen Verfahrens,
- Fig. 9:: eine dritte Variante eines erfindungsgemäßen Produkts hergestellt gemäß des erfindungsgemäßen Verfahrens, und
- Fig. 10:: eine vierte Variante eines erfindungsgemäßen Produkts hergestellt gemäß des erfindungsgemäßen Verfahrens.

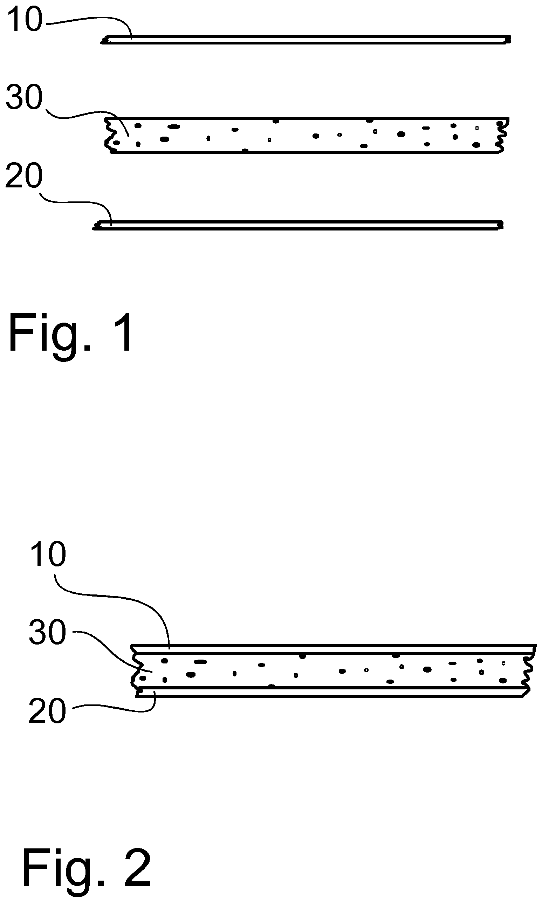

Figur 1 zeigt die einzelnen Bestandteile eines Materialverbunds, mit dem das erfindungsgemäße Verfahren ausgeführt wird. Der Materialverbund umfasst eine erste Lage 10 bestehend aus einem thermoplastischen Material wie PP, die plattenförmig ist und eine Dicke im Bereich zwischen 0,5 und 2,5 mm aufweist. Unterseitig ist eine zweite Lage 20 angeordnet, die ebenfalls aus einem thermoplastischem Kunststoff wie PP besteht, der aber beispielsweise mit Glasfasern verstärkt ist und eine erhöhte Dicke aufweist, die im Bereich zwischen einem und fünf Millimetern liegt.

Zwischen der ersten Lage 10 und der zweiten Lage 20 ist eine Schaumlage 30 angeordnet, die aus einem offenzelligen Kunststoff, beispielsweise aus PUR (in der Regel duroplastisch oder elastomer), besteht. Die Dicke dieser Schaumlage beträgt in der Regel zwischen einem und zwanzig Millimetern, sie kann aber auch darüber und darunter liegen. Neben offenzelligen Schaumstoffen ist auch die Verwendung von gemischtzelligen Schaumstoffen grundsätzlich möglich. Während Figur 1 die einzelnen Lagen des Materialverbunds zur Verdeutlichung einzeln darstellt, zeigt Figur 2 den Materialverbund in der Form, in der er der Kavität eines Formwerkzeugs 40 zugeführt wird.

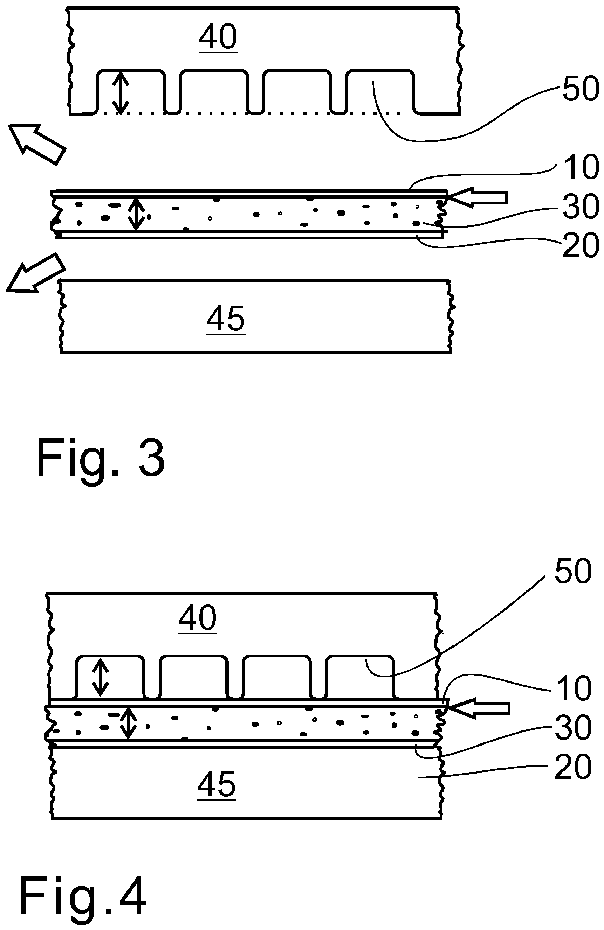

In Figur 3 ist nun die geöffnete Kavität eines Formwerkzeugs dargestellt, welches eine erste Formhälfte 40 und eine zweite Formhälfte 45 ausbildet. Die beiden Formhälften 45 sind beheizt und gegeneinander verfahrbar, so dass die zwischen den Formhälften 40 und 45 ausgebildete Kavität geschlossen werden kann. Ein entsprechendes Formwerkzeug ist aus dem Stand der Technik vielfältig bekannt und wird daher nicht näher beschrieben. Das Formwerkzeug kann durch in die Formhälften 40, 45 integrierte Heizelemente direkt beheizt werden. Es kann aber auch auf beheizten Werkzeugtischen einer Heizplattenpresse angeordnet sein, so dass eine Beheizung der Formhälften 40, 45 über die in Figur 3 nicht dargestellten Werkzeugtische erfolgt. Übliche Betriebstemperaturen für die Formwerkzeuge liegen im Bereich von 250°C bis etwa 350°C, abhängig vom verwendeten (thermoplastischen) Kunststoffmaterial, bevorzugt im Temperaturintervall zwischen 250°C - 270°C und 300° C.

Figur 4 zeigt nun das einsetzende Schließen des Formwerkzeugs durch Verfahren der Formhälften 40, 45 gegeneinander wobei der in die Kavität des Formwerkzeugs eingebrachte Materialverbund ebenfalls dargestellt ist. Dabei ist durch Pfeile angedeutet, dass die Stärke der Schaumlage 30 geringer ist als die Formtiefe der in der oberen Formhälfte 40 ausgebildeten Strukturen.

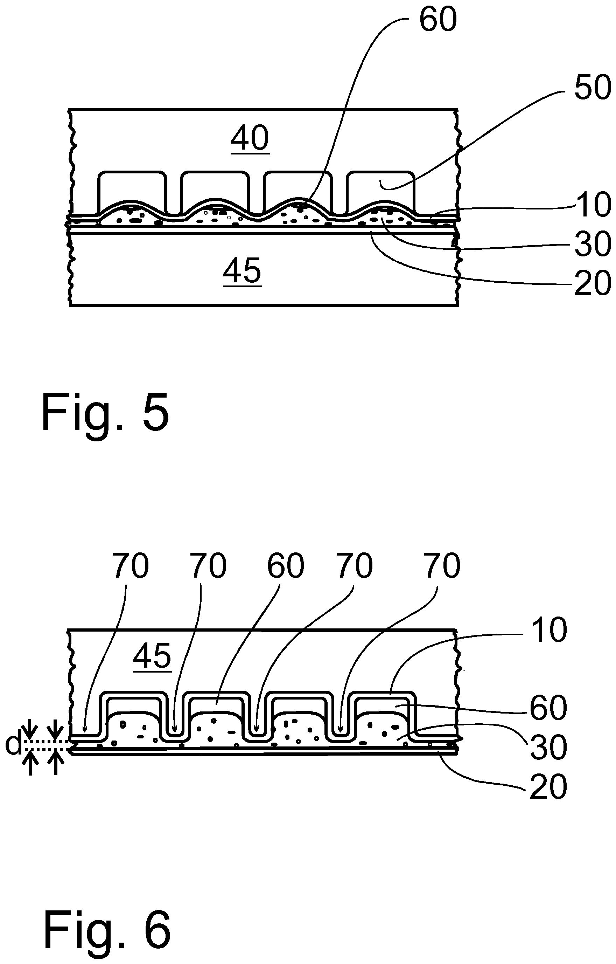

Figur 5 zeigt die bei anhaltendem Zufahren der Formhälften auftretende Kompression des Materialverbunds, welche einhergeht mit einem Ablösen der ersten Lage 10 von der darunter liegenden Schaumlage 30 im Bereich der mit 50 gekennzeichneten Hohlräumen der ersten Formhälfte 40 des Formwerkzeugs. In diesen Bereichen ist die Schaumlage 30 weniger stark komprimiert als in den umliegenden Bereichen.

Figur 6 zeigt den Schließzustand des Formwerkzeugs, in dem sich durch thermische Verformung der ersten Lage 10 kästchenartige Strukturen in der ersten Lage 10 ausgebildet haben. Weiterhin hat eine irreversible Verformung der Schaumlage 30 in den durch die Formhälften 40, 45 des Formwerkzeugs druckbeaufschlagten Abschnitten stattgefunden, welche mit einer thermischen Verschweißung des Materialverbunds in diesen Bereichen einhergeht. Im Inneren der kästchenförmigen Strukturen befindet sich neben der (lokal nur geringfügig oder gar nicht komprimierten) Schaumlage 30 ein luftgefülltes Volumen, welches mit 60 bezeichnet ist. Dabei ist die Formgebung des Formwerkzeugs so gewählt, dass der Innenraum der entstehenden Kästchenstruktur vollständig gegenüber der Umgebung abgeschlossen ist. Dies wird durch eine allseitige thermische Verschweißung des Materialverbunds durch eine ununterbrochene Schweißnaht sichergestellt.

Die Ausbildung der luftgefüllten Kästchenstrukturen im Rahmen des vorstehend zitierten erfindungsgemäßen Verfahrens basiert in erster Linie darauf, dass beim Zufahren der Formhälften 40 und 45 des Formwerkzeugs in den Poren des offen- oder gemischtzelligen Schaumstoffs der Schaumlage 30 gefangene Luft entweicht und zu einem Aufblähen der Kammerstrukturen führt. Dieses Aufblähen kann bei der Verfahrensführung noch dadurch unterstützt werden, dass beim Zufahren der Formhälften des Formwerkzeugs Luft aus der Kavität des Formwerkzeugs abgesaugt wird. Dies kann insbesondere so geschehen, dass ein gewisser Unterdruck im Formwerkzeug erzeugt wird, so dass die durch Erhitzen beweglich gemachte erste Lage 10 in die Kästchenstrukturen der oberen Formhälfte 40 des Formwerkzeugs "gesagt" wird. Dieses Evakuieren des Innenraums der Kavität wird durch die aus der Kavität heraus gerichteten Pfeile in Figur 3 angedeutet.

Weiterhin kann die Ausbildung der luft- oder gasgefüllten (hier: Kästchen-) Strukturen im Rahmen des erfindungsgemäßen Herstellungsverfahrens noch weiter unterstützt werden, indem während des Zuführen des Materialverbunds zur Kavität des Formwerkzeugs zusätzlich Luft oder (Inert-) Gas eingeblasen wird, bevorzugt dabei in den Bereich der Schaumlage 30, besonders bevorzugt in den Bereich, der zwischen der Schaumlage 30 und der ersten Lage 10 und /oder der zweiten Lage 20 gefangen ist. Dies kann beispielsweise bei der Zuführung der plattenförmigen, ersten Lage 10 und der plattenförmigen Schaumlage 30 geschehen, in dem zwischen diese Lagen Druckluft oder ein anderes Inertgas eingeblasen wird.

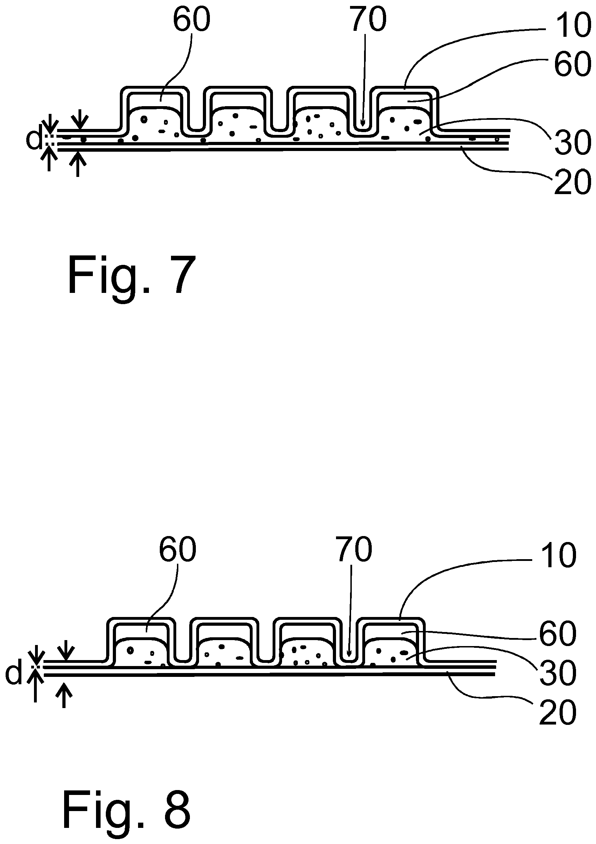

Die im diskutierten Ausführungsbeispiel bei der Ausführung des erfindungsgemäßen Verfahrens entstehende Kästchenstruktur ist in Figur 7 nochmals in einer ersten Variante dargestellt, in der durch die spezielle Verfahrensführung sichergestellt ist, dass in den komprimierten Abschnitten 70 der Struktur eine Restmaterialstärke d der Schaumlage 30 verbleibt. Diese Restmaterialstärke d kann durch die Verfahrensführung und die Formgebung des Formwerkzeugs gezielt eingestellt werden. In der gezeigten ersten Produktvariante beträgt sie typisch zwischen 0,1 und 1 mm.

Figur 8 zeigt eine zweite Produktvariante, die im Wesentlichen der aus Figur 7 ersichtlichen Produktvariante entspricht, wobei hier die Verfahrensführung bei der Herstellung des in Figur 8 dargestellten Produkts so gewählt wurde, dass in den komprimierten Abschnitten 70 das PUR-Schaumstoffmaterial der Schaumlage 30 praktisch vollständig verdrängt wurde. Hier liegt demnach eine praktisch unmittelbare Verschweißung der ersten Lage 10 mit der zweiten Lage 20 vor, was zu einer erhöhten Festigkeit des Materialverbunds im fertigen Produkt führen kann.

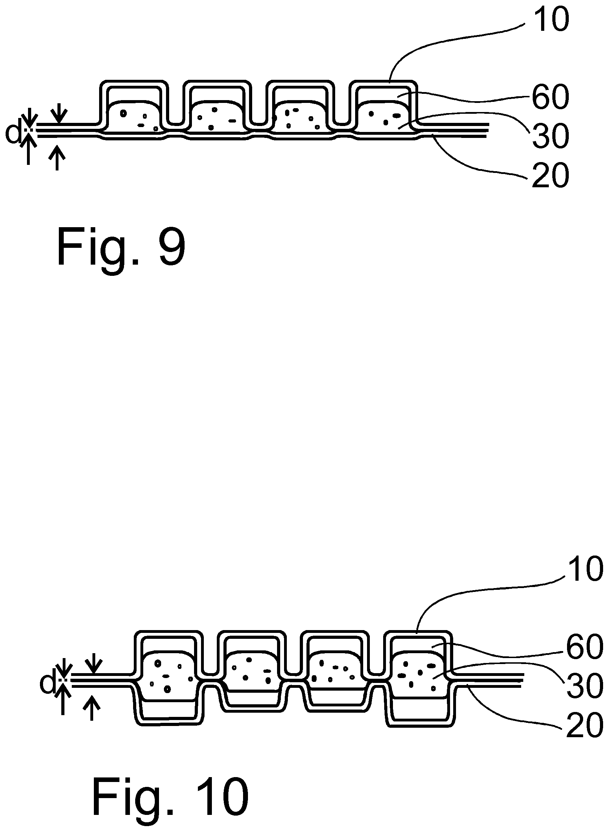

Figur 9 zeigt schließlich eine dritte Variante des fertigen Produkts, die mittels eines Formwerkzeugs hergestellt wurde, in der auch die untere Formhälfte 45 eine solche Strukturierung aufweist, dass auch die zweite Lage 30 punktuell druckbeaufschlagt wird, so dass sich gegenüberliegende Eindrückungen sowohl in der ersten Lage 10 als auch in der zweiten Lage 20 ausgebildet werden. In dieser Variante ist es besonders einfach, praktisch das gesamte Material der Schaumlage 30 aus den komprimierten Abschnitten 70 zu verdrängen und damit zu einer mechanisch besonders hoch belastbaren Verschweißung der ersten Lage 10 mit der zweiten Lage 20 zu gelangen.

Schließlich ergibt sich aus Figur 10 eine vierte Variante des fertigen Produkts, die mittels eines Formwerkzeugs hergestellt wurde, in der auch die untere Formhälfte 45 eine solche Strukturierung aufweist, dass auch die zweite Lage 30 kästchenartige Luftvolumen 60 ausbildet, die der in der ersten Lage 10 ausgebildeten Kästchenstruktur entgegen gerichtet sind, aber nicht zwingend die selbe Geometrie aufweisen müssen. Auch können sich die sich in der zweiten Lage 20 ausbildenden Kästchen in dieselbe Richtung erstrecken wie die Kästchen in der ersten Lage 10, so dass die Kästchen der zweiten Lage in die Kästchen der ersten Lage hineingreifen.

Weiterhin wird auch die zweite Lage 30 beim Expansionspressen bevorzugt punktuell druckbeaufschlagt, so dass sich vorteilhaft zumindest punktuell gegenüberliegende Eindrückungen sowohl in der ersten Lage 10 als auch in der zweiten Lage 20 ausbilden. Auch in dieser Variante ist es besonders einfach, praktisch das gesamte Material der Schaumlage 30 aus den komprimierten Abschnitten 70 zu verdrängen und damit wiederum zu einer mechanisch besonders hoch belastbaren Verschweißung der ersten Lage 10 mit der zweiten Lage 20 zu gelangen.

Wie erwähnt stellt es einen besonderen Vorteil des erfindungsgemäßen Verfahrens dar, dass der erste und der zweite Kunststoff chemisch oder / und physikalisch voneinander verschieden sein können. So können der erste und der zweite Kunststoff voneinander verschiedene Farben aufweisen, wodurch sich gestalterische Vorteile ergeben, die z.B. bei der Herstellung von Schallschutzelementen mit einer Sichtseite und einer Funktionsseite relevant werden können. So können die Produktvarianten gemäß der Figuren 7 bis 10 insbesondere als wirksame akustische Dämpfungselemente für die Gebäudeakustik verwendet werden, wobei die Varianten gemäß der Figuren 7 und 8 besondere optische Vorteile aufgrund der Ausbildung einer ebenen Sichtseite aufweisen. Diese kann z.B. durch entsprechende Formgebung der für das Expansionspressen verwendeten Formhälfte, in der die zweite Lage 20 während des Expansionspressens zur Anlage kommt, mustergeprägt werden, um eine optisch ansprechende Dekorierung der Sichtseite zu erzeugen. Auch kann durch Einbringen einer zusätzlichen Dekorlage (nicht dargestellt) in das für das Expansionspressen verwendete Formwerkzeug entweder die erste Lage 10 und/oder die zweite Lage 20 mit einer vorteilhaften Oberflächentextur versehen werden, z.B. indem eine im fertigen Produkt außenliegende prägefähige Schicht, die z.B. aus einem Vliesstoff bestehen kann, mit der ersten und/oder der zweiten Lage 20 verprägt wird.

Die Variante gemäß der Figur 9 weist eine besonders hohe mechanische Stabilität auf, wogegen die Variante gemäß Figur 10 eine besonders hohe akustische Wirksamkeit zeigt. Alle Produktvarianten weisen den Vorteil auf, dass der in den sich ausbildenden luft- oder gasgefüllten Strukturen eingeschlossene Innenraum des hergestellten akustisch wirksamen Elements vollständig gegenüber Umgebungseinflüssen geschützt ist. Dies macht eine Verwendung in Bereichen mit erhöhten hygienischen Anforderungen, z.B. im Sanitärbereich, in Schwimmbädern oder auch in Krankenhäusern und Schlachthöfen, wo eine möglichst einfache und rückstandfreie Beseitigung von hygienisch bedenklichen Verschmutzungen z.B. mittels direktem Abspritzen mit einem in Wasser gelösten Reinigungsmittel gefordert wird, besonders vorteilhaft.

Weiterhin können alle Produktvarianten vorteilhaft als Decken- oder Wandelemente oder auch als hängende oder stehende Schallschutzpaneele in der Gebäudeakustik verwendet werden, z.B. in Bereichen mit hoher Lärmbelastung durch Maschinen, im Bürobereich z.B. als Raumteiler oder auch in öffentlichen Bauten mit hoher Lärmbelastung, z.B. in Schulen und Hochschulen, Kindergärten, Behörden, Bahn- und Flughäfen eingesetzt werden. Gerade bei einer Verwendung im öffentlichen Bereich ist die realisierbare hermetische Verkapselung des in den Elementen eingeschlossenen Gas- bzw. Luftraums wegen der erhöhten Verschmutzungsgefahr besonders vorteilhaft.

Weiterhin kann der platten- oder folienförmige erste Kunststoff andere mechanische Eigenschaften aufweisen als der platten- oder folienförmige zweite Kunststoff, z.B. indem verschiedene Materialstärken ein und desselben Kunststoffmaterials verwendet werden. Alternativ kann es sich entweder bei dem zweiten Kunststoff auch um einen faserverstärkten Kunststoff (GMT, LWRT) handeln, der eine hohe Schlagzähigkeit aufweist. Bei dem ersten Kunststoff kann es sich hingegen um ein ungefülltes/nicht verstärktes Thermoplast wie PP handeln, welches sich hervorragend thermoformen lässt. Eine solche Materialkombination lässt sich z.B. vorteilhaft zur Herstellung von akustisch wirksamen Motorraumkapseln verwenden, wobei die verstärkte Seite zum Fahrzeug-Unterboden und die PP-Seite zum Motorraum weist. Die PP-Seite bildet dann die akustisch wirksamen Strukturen aus. Die Produktvarianten gemäß den Figuren 7, 8 und 9 könnten auch eine solche Motorraumkapsel wiedergeben.

Wird eine besonders hohe akustische Wirksamkeit des mittels des efindungsgemäßen Verfahrens hergestellten Produkts gefordert, so hat es sich als besonders vorteilhaft erwiesen, wenn die Formgebung des verwendeten Formwerkzeugs und/oder die spezielle Verfahrensführung so gewählt werden, dass sich gas- bzw. luftgefüllte Kästchenstrukturen ausbilden, deren Seitenflächen eine größere Dicke aufweisen als die Deckfläche. Hierdurch sind die seitenwände deutlich weniger schwingfähig als die Deckfläche, die vielmehr eine schwingfähige Membran darstellt.

Abschließend wird darauf hingewiesen, dass sich die Verwendung einer zwischen der ersten Lage 10 und der zweiten Lage 20 angeordneten offenzelligen oder gemischtzelligen Schaumlage 30 für das erfindungsgemäße Verfahren als besonders vorteilhaft herausgestellt hat, insbesondere in Bezug auf die akustischen Eigenschaften des hergestellten Formteils. Im Rahmen der praktischen Erprobung des erfindungsgemäßen Verfahrens wurde aber festgestellt, dass bei geeigneter Verfahrensführung eine Schaumlage 30 auch vollständig entfallen kann, insbesondere wenn beim Zuführen des Materialverbunds zur Kavität des Formwerkzeugs unterstützend Luft zwischen die erste Lage 10 und die zweite Lage 20 eingeblasen wird und/oder Luft aus der Kavität des Formwerkzeugs abgesaugt wird, insbesondere ein Unterdruck in der Kavität des Formwerkzeugs eingestellt wird.

Der besondere Vorteil des erfindungsgemäßen Verfahrens in allen seinen speziellen Ausgestaltungen liegt darin, dass die Anforderungen an die zu verwendenden Werkzeugmaschinen gegenüber den sonst für die Herstellung von Kunststoffhohlkörpern häufig verwendeten Blasformmaschinen deutlich verringert sind. Das erfindungsgemäße Verfahren ist daher insbesondere geeignet zur Herstellung kleinerer Serien von Kunststoffhohlkörpern, die sich mit der Blasformtechnik nicht rationell herstellen lassen würden.

Das erfindungsgemäße Produkt weist insbesondere den Vorteil auf, dass unterschiedlichste Materialkombinationen von erster Lage 10 und zweiter Lage 20 darstellbar sind, was es insbesondere ermöglicht, individuelle ästhetische Gestaltungen beispielsweise durch unterschiedliche Farbgebung der ersten Lage 10 und der zweiten Lage 20 zu realisieren. Darüber hinaus können auch spezielle Anforderungen an die physikalischen oder chemischen Eigenschaften der ersten Lage 10 und der zweiten Lage 20 realisiert werden. So kann es beispielsweise Anwendungsfälle geben, in denen eine sehr hohe mechanische Stabilität der eine mehr oder weniger ebene Fläche ausbildenden zweiten Lage 20 gewünscht ist. Beispielhaft hierfür sei auf eine Motorraumkapsel für ein Kraftfahrzeug verwiesen, wie sie sich beispielsweise aus der EP0775354B1 ergibt. Die Unterseite der Motorraumkapsel bildet zugleich die Fahrzeugunterseite aus und muss daher eine erhöhte mechanische Belastbarkeit aufweisen. Besonders geeignet hierfür sind faserverstärkte, thermoplastische Kunststoffe wie GMT oder LWRT. Besonders gute akustische Eigenschaften erhält man aber, wenn die zum Motorraum gerichtete Kästchenstruktur aus einem gut schwingfähigen, dünneren Material wie beispielsweise PP gefertigt ist.

Schließlich wird darauf hingewiesen, dass die für die erste Lage 10 und die zweite Lage 20 verwendeten Kunststoffe ohne weiteres verschiedene chemische Eigenschaften aufweisen können, z.B. unterschiedlich widerstandsfähig gegenüber der Einwirkung verschiedener aggressiver Medien wie Säuren, Laugen, Ölen, heißem Wasser oder Wasserdampf etc. sein können. Dies kann beispielsweise bei der Fertigung von akustisch wirksamen Wandelementen von Vorteil sein, die nur auf ihrer einen Oberfläche der Einwirkung eines solchen aggressiven Mediums ausgesetzt sind. Das für die abgewandte Oberfläche verwendete Material kann dann im Hinblick auf die akustischen Eigenschaften optimiert werden.

## Patentansprüche

1. Verfahren zur Herstellung von Kunststoffhohlkörpern mittels eines beheizten Formwerkzeugs, welches eine Kavität ausbildet, mit den folgenden Verfahrensschritten:
a. Bereitstellen eines Materialverbunds bestehend aus
i. einer platten- oder folienförmigen, ersten Lage (10) aus einem thermoplastischen, ersten Kunststoff,
ii. einer platten- oder folienförmigen, zweiten Lage (20) aus einem zweiten Kunststoff,
iii. einer zwischen der ersten und der zweiten Lage (10, 20) angeordneten plattenförmigen, offenzelligen oder gemischtzelligen Schaumlage (30) aus einem dritten Kunststoff,
b. Zuführen des Materialverbunds zu der geöffneten Kavität eines beheizten Formwerkzeugs, und
c. Schließen des Formwerkzeugs, wobei
i. zumindest abschnittsweise Druck auf den Materialverbund ausgeübt wird, dergestalt, dass in den druckbeaufschlagten Abschnitten die erste und / oder zweite Lage (10, 20) thermogeformt sowie die Schaumlage (30) komprimiert wird, woraus eine dauerhafte Verformung zumindest der ersten Lage und/oder der zweiten Lage (10, 20) und der Schaumlage (30) resultiert,
ii. sich im Formwerkzeug die erste und/oder zweite Lage (10, 20) partiell von der Schaumlage (30) dergestalt löst, dass die Schaumlage (30) im Wesentlichen nur in den komprimierten Abschnitten (70) in mechanischem Kontakt mit der ersten und/oder zweiten Lage (10, 20) steht,
iii. sich in den Bereichen ohne mechanischen Kontakt ein luft-/gasgefüllter Hohlraum, der allseitig abgeschlossen ist bildet, wobei die Luft bzw. das Gas, welches neben der verbleibenden Schaumlage (30) die entstehenden Hohlräume ausfüllt, zu wesentlichen Teilen aus den Poren in den komprimierten Bereichen der offen- oder gemischtzelligen Schaumlage (30) stammt.

2. Verfahren gemäß Anspruch 1, **dadurch gekennzeichnet, dass** beim Schließen des Formwerkzeugs Luft aus der Kavität abgesaugt wird.

3. Verfahren gemäß Anspruch 2, **dadurch gekennzeichnet, dass** beim Absaugen der Luft ein Unterdruck in der Kavität erzeugt wird.

4. Verfahren gemäß Anspruch 1, **dadurch gekennzeichnet, dass** beim Zuführen des Materialverbunds zur Kavität des Formwerkzeugs Luft bzw. ein inertes Füllgas zwischen die Schaumlage (30) und die erste Lage und/oder die zweite Lage (10, 20) eingeblasen wird.

5. Verfahren gemäß Anspruch 1, **dadurch gekennzeichnet, dass** die erste Lage (10) in den druckbeaufschlagten Abschnitten (70) mit der zweiten Lage (20) und / oder mit der Schaumlage (30) bevorzugt thermisch verschweißt wird.

6. Verfahren gemäß Anspruch 5, **dadurch gekennzeichnet, dass** die thermische Verschweißung der ersten Lage (10) mit der Schaumlage (30) und/oder der zweiten Lage (20) so ausgeführt wird, dass der entstehende Kunststoffhohlkörper einen im Wesentlichen vollständig abgeschlossenen Innenraum einschließt.

7. Verfahren gemäß Anspruch 1, **dadurch gekennzeichnet dass** der zweite und/oder der dritte Kunststoff ein Thermoplast, ein Duroplast oder ein Elastomer ist.

8. Verfahren gemäß Anspruch 1, **dadurch gekennzeichnet, dass** der erste und der zweite Kunststoff chemisch und / oder physikalisch voneinander verschieden sind.

9. Verfahren gemäß Anspruch 1, **dadurch gekennzeichnet, dass** die platten- oder folienförmige erste Lage (10) andere mechanische Eigenschaften aufweist als die platten- oder folienförmige, zweite Lage (20).

10. Kunststoffhohlkörper umfassend einen Materialverbund bestehend aus
a. einer formgeprägten platten- oder folienförmigen ersten Lage (10) aus einem thermoplastischen ersten Kunststoff,
b. einer ggf. formgeprägten platten- oder folienförmigen zweiten Lage (20) aus einem zweiten Kunststoff,
c. einer zwischen der ersten und der zweiten Lage (10, 20) angeordneten offenzelligen oder gemischtzelligen Schaumlage (30) aus einem dritten Kunststoff,
wobei
d. die Schaumlage (30) zumindest abschnittsweise komprimiert ist entsprechend der Formprägung der ersten Lage (10) und/oder der zweiten Lage (20),
e. die Schaumlage (30) im Wesentlichen nur in den komprimierten Abschnitten (70) in mechanischem Kontakt mit der ersten oder / und der zweiten Lage (10, 20) steht und
f. sich in den Bereichen ohne mechanischen Kontakt ein luft-/gasgefüllter Hohlraum, der allseitig abgeschlossen ist bildet, wobei die Luft bzw. das Gas, welches neben der verbleibenden Schaumlage (30) die entstehenden Hohlräume ausfüllt, zu wesentlichen Teilen aus den Poren in den komprimierten Bereichen der offen- oder gemischtzelligen Schaumlage (30) stammt.

11. Kunststoffhohlkörper gemäß Anspruch 10, **dadurch gekennzeichnet, dass** die erste Lage (10) in den komprimierten Abschnitten (70) mit der zweiten Lage (20) und / oder mit der Schaumlage (30) bevorzugt thermisch verschweißt ist.

12. Kunststoffhohlkörper gemäß Anspruch 10, **dadurch gekennzeichnet, dass** der Kunststoffhohlkörper einen im Wesentlichen vollständig abgeschlossenen Innenraumraum einschließt.

13. Kunststoffhohlkörper gemäß Anspruch 10, **dadurch gekennzeichnet, dass** der zweite und /oder der dritte Kunststoff ein Thermoplast, ein Duroplast oder ein Elastomer ist.

14. Kunststoffhohlkörper gemäß Anspruch 10, **dadurch gekennzeichnet, dass** der erste und der zweite Kunststoff chemisch und/oder physikalisch voneinander verschieden sind.

15. Kunststoffhohlkörper gemäß Anspruch 10, **dadurch gekennzeichnet, dass** die platten- oder folienförmige erste Lage (10) andere mechanische Eigenschaften aufweist als die platten- oder folienförmige, zweite Lage (20).

16. Kunststoffhohlkörper gemäß Anspruch 10, **dadurch gekennzeichnet, dass** der erste und der zweite Kunststoff voneinander verschiedene Farben aufweisen.

## Claims

1. Method for producing hollow plastic bodies by means of a heated molding tool, which forms a cavity, comprising the following method steps:
a. providing a material composite consisting of
i. a panel or sheet-like first layer (10) of a first thermoplastic synthetic material,
ii. a panel or sheet-like second layer (20) of a second synthetic material,
iii. a panel-like, open-cell or mixed-cell foam layer (30) of a third synthetic material disposed between the first and the second layer (10,20),
b. feeding the material composite to the opened cavity of a heated molding tool, and
c. closing the molding tool, wherein
i. pressure is applied onto the material composite at least in some sections such that, in the pressurized sections, the first and/or second layer (10, 20) is thermoformed and the foam layer (30) is compressed, which results in a permanent deformation, at least of the first layer and/or the second layer (10, 20) and of the foam layer (30),
ii. the first and/or second layer (10, 20), in the molding tool, detaches partially from the foam layer (30) in such a way that the foam layer (30) is in mechanical contact with the first or/and second layer (10, 20) substantially only in the compressed sections (70),
iii. an air or gas-filled void, which is sealed on all sides, forms in the areas without mechanical contact, wherein the air or gas, which apart from the remaining foam layer (30) fills the voids created, stems to a substantial extent from the pores in the compressed areas of the open-cell or mixed-cell foam layer (30).

2. Method according to claim 1, **characterized in that** air is drawn out of the cavity when the molding tool is being closed.

3. Method according to claim 2, **characterized in that** a negative pressure is generated in the cavity when air is being drawn out.

4. Method according to claim 1, **characterized in that** air or an inert filling gas is blown between the foam layer (30) and the first layer and/or the second layer (10, 20) when the material composite is being fed to the cavity of the molding tool.

5. Method according to claim 1, **characterized in that** the first layer (10) is preferably thermally welded, in the pressurized sections (70), to the second layer (20) and/or to the foam layer (30).

6. Method according to claim 5, **characterized in that** the first layer (10) is thermally welded to the foam layer (30) and/or the second layer (20) in such a way that the hollow plastic body produced encloses a substantially completely sealed inner space.

7. Method according to claim 1, **characterized in that** the second and/or the third synthetic material is a thermoplastic, a duroplastic or an elastomer.

8. Method according to claim 1, **characterized in that** the first and the second synthetic material are chemically and/or physically different.

9. Method according to claim 1, **characterized in that** the panel or sheet-like first layer (10) has different mechanical properties from the panel or sheet-like second layer (20).

10. Hollow plastic body, comprising a material composite consisting of
a. a stamp-formed panel or sheet-like first layer (10) of a first thermoplastic synthetic material,
b. an optionally stamp-formed panel or sheet-like second layer (20) of a second synthetic material,
c. an open-cell or mixed-cell foam layer (30) of a third synthetic material disposed between the first and the second layer (10, 20),
wherein
d. the foam layer (30) is compressed at least in some sections in accordance with the stamped form of the first layer (10) and/or the second layer (20),
e. the foam layer (30) is in mechanical contact with the first or/and second layer (10, 20) substantially only in the compressed sections (70), and
f. an air or gas-filled void, which is sealed on all sides, forms in the areas without mechanical contact, wherein the air or gas, which apart from the remaining foam layer (30) fills the voids created, stems to a substantial extent from the pores in the compressed areas of the open-cell or mixed-cell foam layer (30).

11. Hollow plastic body according to claim 10, **characterized in that** the first layer (10) is preferably thermally welded, in the compressed sections (70), to the second layer (20) and/or to the foam layer (30).

12. Hollow plastic body according to claim 10, **characterized in that** the hollow plastic body encloses a substantially completely sealed inner space.

13. Hollow plastic body according to claim 10, **characterized in that** the second and/or the third synthetic material is a thermoplastic, a duroplastic or an elastomer.

14. Hollow plastic body according to claim 10, **characterized in that** the first and the second synthetic material are chemically and/or physically different.

15. Hollow plastic body according to claim 10, **characterized in that** the panel or sheet-like first layer (10) has different mechanical properties from the panel or sheet-like second layer (20).

16. Hollow plastic body according to claim 10, **characterized in that** the first and second synthetic material have different colors.

## Revendications

1. Procédé de fabrication de corps creux en matière plastique au moyen d'un outil de formage chauffé qui forme une cavité, comprenant les étapes de procédé suivantes:
a. fournir un assemblage de matériaux constitué par
i. une première couche (10) en forme de plaque ou de feuille, en une première matière plastique thermoplastique,
ii. une deuxième couche (20) en forme de plaque ou de feuille, en une deuxième matière plastique,
iii. une couche de mousse (30) à cellules ouvertes ou à cellules mixtes, en forme de plaque, faite d'une troisième matière plastique et disposée entre les première et deuxième couches (10, 20),
b. amener ledit assemblage de matériaux à la cavité ouverte d'un outil de formage chauffé, et
c. fermer ledit outil de formage, dans lequel
i. de la pression est exercée au moins par sections sur l'assemblage de matériaux de telle manière que, dans les sections soumises à la pression, la première et/ou la deuxième couche (10, 20) est thermoformée et la couche de mousse (30) est comprimée d'où résulte une déformation durable au moins de la première couche et/ou de la deuxième couche (10, 20) et de la couche de mousse (30),
ii. la première et/ou la deuxième couche (10, 20) se détache, à l'intérieur de l'outil de formage, partiellement de la couche de mousse (30) de telle sorte que la couche de mousse (30) n'est en contact mécanique avec la première et/ou la deuxième couche (10, 20) que pour l'essentiel dans les sections (70) comprimées,
iii. un vide rempli d'air/de gaz qui est fermé de tout côté se forme dans les zones où il n'y a pas de contact mécanique, l'air ou bien le gaz qui, outre la couche de mousse (30) restante, comble les vides produits provenant pour l'essentiel des pores dans les zones comprimées de la couche de mousse (30) à cellules ouvertes ou à cellules mixtes.

2. Procédé selon la revendication 1, **caractérisé par le fait que** de l'air est aspiré hors de la cavité lors de la fermeture de l'outil de formage.

3. Procédé selon la revendication 2, **caractérisé par le fait qu'**une dépression est générée dans la cavité pendant l'aspiration de l'air.

4. Procédé selon la revendication 1, **caractérisé par le fait que** de l'air ou un gaz de remplissage inerte est insufflé entre la couche de mousse (30) et la première couche et/ou la deuxième couche (10, 20) lorsque l'assemblage de matériaux est amené à la cavité de l'outil de formage.

5. Procédé selon la revendication 1, **caractérisé par le fait que**, dans les sections (70) soumises à la pression, la première couche (10) est soudée de préférence thermiquement avec la deuxième couche (20) et/ou avec la couche de mousse (30).

6. Procédé selon la revendication 5, **caractérisé par le fait que** le soudage thermique de la première couche (10) avec la couche de mousse (30) et/ou la deuxième couche (20) est réalisé de telle manière que le corps creux en matière plastique produit renferme un espace intérieur fermé pour l'essentiel complètement.

7. Procédé selon la revendication 1, **caractérisé par le fait que** la deuxième et/ou la troisième matière plastique est une matière thermoplastique, une matière thermodurcissable ou un élastomère.

8. Procédé selon la revendication 1, **caractérisé par le fait que** la première et/ou la deuxième matière plastique sont différentes l'une de l'autre chimiquement et/ou physiquement.

9. Procédé selon la revendication 1, **caractérisé par le fait que** la première couche (10) en forme de plaque ou de feuille présente des propriétés mécaniques différentes de celles de la deuxième couche (20) en forme de plaque ou de feuille.

10. Corps creux en matière plastique comprenant un assemblage de matériaux se composant
a. d'une première couche (10) estampée en forme de plaque ou de feuille, en une première matière plastique thermoplastique,
b. d'une deuxième couche (20) en forme de plaque ou de feuille, en une deuxième matière plastique, le cas échéant estampée,
c. d'une couche de mousse (30) à cellules ouvertes ou à cellules mixtes, faite d'une troisième matière plastique et disposée entre les première et deuxième couches (10, 20),
dans lequel
d. la couche de mousse (30) est comprimée au moins par sections, conformément au motif estampé de la première couche (10) et/ou de la deuxième couche (20),
e. la couche de mousse (30) n'est en contact mécanique avec la première et/ou la deuxième couche (10, 20) que pour l'essentiel dans les sections (70) comprimées, et
f. un vide rempli d'air/de gaz qui est fermé de tout côté se forme dans les zones où il n'y a pas de contact mécanique, l'air ou bien le gaz qui, outre la couche de mousse (30) restante, comble les vides produits provenant pour l'essentiel des pores dans les zones comprimées de la couche de mousse (30) à cellules ouvertes ou à cellules mixtes.

11. Corps creux en matière plastique selon la revendication 10, **caractérisé par le fait que**, dans les sections (70) comprimées, la première couche (10) est soudée de préférence thermiquement avec la deuxième couche (20) et/ou avec la couche de mousse (30).

12. Corps creux en matière plastique selon la revendication 10, **caractérisé par le fait que** le corps creux en matière plastique renferme un espace intérieur fermé pour l'essentiel complètement.

13. Corps creux en matière plastique selon la revendication 10, **caractérisé par le fait que** la deuxième et/ou la troisième matière plastique est une matière thermoplastique, une matière thermodurcissable ou un élastomère.

14. Corps creux en matière plastique selon la revendication 10, **caractérisé par le fait que** la première et/ou la deuxième matière plastique sont différentes l'une de l'autre chimiquement et/ou physiquement.

15. Corps creux en matière plastique selon la revendication 10, **caractérisé par le fait que** la première couche (10) en forme de plaque ou de feuille présente des propriétés mécaniques différentes de celles de la deuxième couche (20) en forme de plaque ou de feuille.

16. Corps creux en matière plastique selon la revendication 10, **caractérisé par le fait que** les première et deuxième matières plastiques présentent des couleurs différentes l'une de l'autre.
